# EUROPEAN PATENT APPLICATION

(11) **EP 2 924 605 A1**
(43) Date of publication of application: **30.09.2015**
(21) Application number: 14812119.7
(22) Date of filing: 14.02.2014
(51) Int. Cl.: G06F 21/34, B60R 25/24

(54) **OPERATOR AUTHENTICATION OPERATION SYSTEM**

(71) Applicant: So. System. Service Co., Ltd., Ome-shi, Tokyo 1980024 (JP)
(72) Inventor: TOKAJI, Sou, Ome-shi Tokyo 198-0024 (JP)
(74) Representative: Treeby, Philip David William
(86) International application number: PCT/JP2014/000754
(87) International publication number: WO 2015/121893

(57) **Abstract**

[Problem to be Solved]

Authentication of a manipulator performing a manipulation of various important manipulation sections is performed effectively without increasing cost and the authentication can be performed via a mobile information terminal depending on an object to be manipulated.

[Solving means]

A manipulator authentication operating system that confirms authentication of a manipulator of a manipulation section and performs a manipulation in cooperation with the manipulation section by a mobile information terminal possessed by the manipulator, wherein the mobile information terminal has "authentication information holding means" for holding unique authentication information and "a communication section" that can transmit the authentication information to the manipulation section and can perform information communication relating to an operation and a manipulation between the communication section and the manipulation section, and the manipulation section has "authentication information decoding means" that decodes authentication information transmitted by the "authentication information holding means" of the mobile information terminal via the "communication section" and, when the decoded authentication information is consistent with collation information held in advance, transmits a signal indicating the consistency to the mobile information terminal; and a manipulation of an object to be manipulated can be manipulated in cooperation with the manipulation section by the mobile information terminal when the "authentication information decoding means" has transmitted a signal indicating that the unique authentication information transmitted from the mobile information terminal is consistent with the collation information to the mobile information terminal.

## Description

### Field of the Invention

This invention relates to a manipulator authentication operating system, and in particular to a manipulator authentication operating system which arranges a mobile information terminal in a manipulation section to acquire authentication.

### Background of the Invention

For example, a manipulation station provided with a display device, a keyboard, and the like is generally arranged in an operation room for performing manipulations of facilities and apparatuses in a factory, a plant or the like. In such a manipulation station, since facilities and apparatuses in a factory or a plant can be manipulated and controlled so that an important work is performed, setting is made such that after authentication of a manipulator who can perform operations in the manipulation station is confirmed, the facilities and apparatuses can be put in a manipulatable state.

As such a so-called personal authentication, there are generally various methods. For example, as the most popular example, there are authentication based upon an ID card, and authentication based upon ID/password. In such an authentication method, however, when a manipulator has forgotten carry of his/her ID card, when a manipulator has lost an ID card, or when a manipulator has forgotten or misunderstood his/her ID/password, authentication becomes impossible, which results in impossibility of using the manipulation station. Further, there is a possibility that the ID card is stolen, and there is a risk of authentication or an apparatus manipulation performed by another person.

On the other hand, by adopting such a biometric authentication as a fingerprint authentication, or a retinal or iris authentication, such a defect does not occur. However, a technique for the fingerprint authentication is historically the oldest technique, and many methods for overcoming the technique have been researched. For example, there was also such an example that authentication was acquired by copying a remaining fingerprint of a targeted person by any appropriate means and creating an artificial fingerprint of the targeted person. Further, though the retinal or iris authentication has a very high authentication precision, an inspection apparatus is much large-scale and costly, which is not popular.

### Summary of the Invention

### Problem to be solved by the Invention

The present invention has been made in order to solve these conventional drawbacks and an object thereof is to perform authentication of a manipulator for performing manipulations of various important manipulation sections effectively without increasing cost and further make it possible to perform a manipulation via a mobile information terminal depending on an object to be manipulated. Means for solving Problems

In order to achieve the above object, the invention described in claim 1 is a manipulator authentication operating system that confirms authentication of a manipulator of a manipulation section and performs a manipulation in cooperation with the manipulation section by a mobile information terminal possessed by the manipulator, wherein the mobile information terminal has "authentication information holding means" for holding unique authentication information and "a communication section" that can transmit the authentication information to the manipulation section and can perform information communication relating to an operation and a manipulation between the communication section and the manipulation section, and the manipulation section has "authentication information decoding means" that decodes authentication information transmitted by the "authentication information holding means" of the mobile via the "communication section" and, when the decoded authentication information is consistent with collation information held in advance, transmits a signal indicating the consistency to the mobile information terminal; and a manipulation of an object to be manipulated can be manipulated by the mobile information terminal in cooperation with the manipulation section when the "authentication information decoding means" has transmitted a signal indicating that the unique authentication information transmitted from the mobile information terminal is consistent with the collation information to the mobile information terminal.

Here, the term "mobile information terminal" means a so-called PDA (Personal Digital Assistants) and broadly indicates a mobile terminal device possessed and used personally, such as, for example, a laptop type personal computer, a mobile phone, a smartphone, or a tablet type computer.

Therefore, in the invention described in claim 1, since the manipulation section decodes authentication information stored in the mobile information terminal and, when the authentication information is consistent with the collation information held in advance, authenticates a manipulator holding the mobile information terminal via the authentication of the mobile information terminal, the manipulator can be put in a manipulatable state of the manipulation section.

The invention described in claim 2 is a manipulator authentication operating system that confirms authentication of a manipulator of an manipulation section and performs a manipulation in cooperation with the manipulation section by a mobile information terminal possessed by the manipulator, wherein the mobile information terminal has "authentication information holding means" for holding unique authentication information and "communication section" that can perform information communication relating to an operation and a manipulation between the communication section and the manipulation section, the manipulation section has "communication section" that can perform information communication between the communication section and the mobile information terminal and "authentication information decoding means" for, when presence of authentication information held by the "authentication information holding means" of the mobile information terminal is confirmed via the "communication section" of the manipulation section, transmitting a signal indicating the presence to the mobile information terminal; and a manipulation of an object to be manipulated can be performed in cooperation with the manipulation section by the mobile information terminal when the "authentication information decoding means" confirms the presence of authentication information held by the "authentication information holding means" and transmits a signal indicating the presence to the mobile information terminal.

Therefore, in the invention described in claim 2, since the manipulation section confirms presence of authentication information stored in the mobile information terminal via the communication section, and when the authentication information has been confirmed, authenticates the manipulator holding the mobile information terminal via the authentication of the mobile information terminal, the manipulator is put in a manipulatable state of the manipulation section.

In the invention described in claim 3, the authentication information is constituted of a predetermined program.

In the invention described in claim 4, the authentication information is constituted of specific information present in a predetermined program.

Therefore, in the invention described in claim 4, the specific information present in the predetermined information includes, for example, specific character information, specific numeral information, specific program setting and the like.

The invention described in claim 5 further includes "manipulation information acquiring and displaying means" that has display frame-specifying information for specifying respective display frames for displaying, on a display of the mobile information terminal, various manipulation information required for an operation and a manipulation of the object to be manipulated and display frame arrangement information showing an arrangement state of the respective display frames within a screen of the display, and requests transmission of the display frames and operation information displayed within the display frames to display information required for a manipulation of the object to be manipulated, wherein the manipulation section is configured so as to transmit a display frame to be displayed on the display of the mobile information terminal and manipulation information to be displayed within the display frame to the mobile information terminal via the communication section in response to a request from the "manipulation information acquiring and displaying means" when it is determined by the authentication information decoding means that the authentication information transmitted from the mobile information terminal is consistent with the collation information.

Therefore, in the invention described in claim 5, when the authentication information decoding means of the manipulation section decodes an authentication number held by the mobile information terminal to confirm that the authentication number in consistent with the collation information, the authentication information decoding means transmits a display frame to be displayed on the display and manipulation information required for a manipulation of the object to be displayed within the display frame to the mobile information terminal, and the "manipulation information acquiring and displaying means" displays the display frame and the manipulation information on the display of the mobile information terminal.

Thereby, the manipulator can perform a substantial manipulation of the object to be manipulated via the manipulation section.

In the invention described in claim 6, the manipulation section is an operation control section of a power driving machine apparatus, and the mobile information terminal is further provided with "manipulation history information file" storing past manipulation history information of the manipulator therein, "operation plan file" storing a future operation plan of the power driving machine apparatus therein, and "operation schedule information file" recording an actual operation schedule therein.

Therefore, in the invention described in claim 6, the manipulator can acquire authentication for manipulations of various power driving machine apparatuses by utilizing the mobile information terminal. Further, since the mobile information terminal has the "manipulation history information file", it holds history information about the past manipulations of the manipulator.

In the invention described in claim 7, the power driving machine apparatus is each of various transport facilities.

In the invention described in claim 8, the power driving machine apparatus is each of various construction machines.

In the invention described in claim 9, the transport facilities are ships, airplanes, electric trains, or land transportation vehicles.

In the invention described in claim 10, the manipulation section is an operating and manipulating station of facilities and apparatuses in a factory, and the mobile information terminal is further provided with "manipulation history information file" storing past manipulation history information of the manipulator therein, "operation plan file" storing an operation plan of facilities and apparatuses in the factory therein, and "operation schedule information file" recording an operation schedule therein.

The "operating and manipulating station" indicates a manipulation terminal machine placed within a manipulation room installed in a factory or a plant in order to manipulate various facilities and apparatuses in a factory, a plant, or the like in a factory, various plants, an electric power station, a research institution, or the like.

In the invention described in claim 11, the manipulation section is a manipulation terminal of a task management information network system installed within a company, and the operation terminal is provided with "manipulation history information file" storing past manipulation history information of the manipulator therein and a "task processing plan file" storing the task processing plan therein.

The "work management information network system" indicates an in-house network system for managing in-house works such as business, sales, business-work, personnel affairs, or financial affairs.

In the invention described in claim 12, the mobile information terminal has "manipulation standard information file" storing manipulation standard information therein, "manipulation monitoring means" for comparing manipulation history information of the manipulator stored in the "manipulation history information file" and manipulation standard information stored in the "manipulation standard information file" with each other to extract a manipulation different from the manipulation standard information, "different manipulation accumulation file" recording a manipulation different from the manipulation standard information and extracted by the manipulation monitoring means therein, and "manipulation-alerting means" for referring to the different manipulation accumulation file and, when the manipulator performs a manipulation identical to the different manipulation, alerting the manipulator such that the manipulator performs a manipulation adapted to the manipulation standard information before the manipulator performs the identical manipulation.

Therefore, in the invention described in claim 12, the mobile information terminal can indicate the tendency of the manipulator based upon the manipulation history information of the manipulator to alert the manipulator in advance if necessary.

In the invention described in claim 13, the authentication information is composed of numerals of a predetermined number of digits, and the authentication information decoding means performs authentication when predetermined numeral information obtained from a mutual combination of the numerals is consistent with collation information held in advance.

### Effects of Invention

Since the invention described in claim 1 is configured such that when the manipulation section decodes the authentication information possessed by the mobile information terminal and the authentication information is consistent with the collation information held in advance, the manipulator holding the mobile information terminal is authenticated via the authentication of the mobile information terminal and the manipulation of the manipulation section is made possible, and the invention described in claim 2 is configured such that when the manipulation section confirms presence of the authentication information possessed by the mobile information terminal, the manipulator holding the mobile information terminal is authenticated via the authentication of the mobile information terminal and the manipulation of the manipulation section is made possible, even if a situation where an ID card has been stolen, which will occur in the conventional case of authentication performed by the ID card, or a situation where an ID/password has been forgotten, which will occur in the case of authentication performed by the ID/password, occurs, authentication required for a manipulation can be secured by the mobile information terminal possessed by the manipulator, so that such a conventional drawback that a manipulation is impossible until another ID card is reissued, the original ID card is found out, or the ID/password is reconfirmed does not occur and a manipulation of the manipulation section can be performed by acquiring authentication smoothly.

Further, since such a configuration is adopted that authentication of the manipulation section is acquired by utilizing various mobile information terminals possessed by the manipulator, the manipulator cannot perform a manipulation of the manipulation section without the mobile information terminal, so that the security regarding a manipulation of an important manipulation section can be secured reliably.

That is, when the mobile information terminal is set so as to require personnel authentication for use of the mobile information terminal itself, the manipulator must first perform a personnel authentication acquiring work for actuating the mobile information terminal to the mobile information terminal, and must then acquire authentication of the manipulation section by using the actuated mobile information terminal, so that the manipulator must perform the authentication acquirement for operation of the manipulation section two time. Therefore, as compared with the case where the manipulator conventionally acquires only the authentication for a manipulation of the manipulation section regarding the manipulation section, the security regarding a manipulation of the manipulation section can be secured more reliably.

Further, since large-scale facilities and apparatuses required for various biometric authentications are not required, the security regarding a manipulation of the manipulation section which is important can be secured reliably without increasing a cost.

Further, in particular, in the case of the manipulation station for manipulating facilities and apparatuses in a factory, a plant, or the like, the manipulation station is conventionally equipped with authentication information holding means, and it is necessary to register authentication information items of all individual manipulators who may perform a manipulation in the authentication information holding means of the manipulation station in advance. In this case, when a factory or a plant is large-scaled and many manipulation stations are installed, all the manipulation stations must be provided with the above authentication information holding means, which results in such a drawback that a manufacturing cost and a maintenance cost of the manipulation stations are increased as a whole.

Furthermore, it is necessary to register authentication information items of all manipulators to all the manipulation stations installed in the factory or the plant, and, for example, in such a case that a manipulator has been changed or position-changed, or in such a case that affairs such as retirement of a manipulator have occurred, it is necessary to perform a work for erasing the registration of the manipulator, which results in much complication of a registering work and a managing work of the authentication information.

However, according to the present invention, since the operation authentication information holding means is not held on the manipulation section side but on the mobile information terminal side, the manipulation station side is not required to have means for holding the authentication information, and a manufacturing cost of the manipulation station can be reduced and a managing work for registering or changing authentication information items of a plurality of manipulators to a plurality of manipulation stations, which is conventionally required, can be excluded, which can result in avoidance from difficulty for managing the authentication information.

Further, in the invention described in claim 3, since the authentication information is a predetermined program itself, when the authentication information decoding means of the manipulation section recognizes presence of the predetermined program, validation for confirming consistency with the collation information or inconsistency therewith, which is required in the invention described in claim 1, becomes unnecessary, so that the authentication information decoding means of the manipulation station can perform authentication more easily.

Similarly, in the invention described in claim 4, since the authentication information is setting or a symbol present in a predetermined program, the authentication information decoding means of the manipulation station can perform authentication more easily like the case of the invention described in claim 3.

In the invention described in claim 5, since the manipulation section is configured so as to transmit a display frame to be displayed on the display of the mobile information terminal and manipulation information to be displayed within the display frame to the mobile information terminal via the communication section in response to a request from the "operation information acquiring and displaying means" when it is determined by the authentication information decoding means that authentication information transmitted from the mobile information terminal is consistent with the collation information, the manipulator can substantially manipulate the manipulation section after the display frame and the operation information have been displayed on the display of the mobile information terminal, so that the security to a manipulation of the manipulation section can be secured in addition to the security based upon collation of the authentication information.

In the invention described in claim 6, the manipulation section is the operation control section of a power driving machine apparatus, the mobile information terminal is further provided with the "manipulation history information file" storing manipulation history information of a manipulator therein, the "operation plan file" storing a future operation plan of the power driving machine apparatus therein, and the "operation schedule information file" recording an actual operation schedule therein, and the manipulator can acquire authentication easily, rapidly, and securely for manipulations of the various power driving machine apparatuses by utilizing the mobile information terminal. Further, since the mobile information terminal has the "manipulation history information file" and holds the history information of manipulations of the manipulator, it is possible to decode information about the manipulations of the manipulator and alert the manipulator regarding a manipulation if necessary.

In the inventions described in claim 7 and claim 9, since the power driving machine apparatus is each of various transport facilities, authentications regarding manipulations of drive control sections equipped in driver's seats of the various transport facilities can be acquired via respective mobile information terminals. Therefore, for example, securement of regarding driving of important transport facilities high in publicity, such as Shinkansen, a railroad such as various electric trains, buses, taxes, airplanes, or ships can be achieved reliably.

In the invention described in claim 8, since the power driving machine apparatus is each of various construction machines, securement of security regarding operations and manipulations of important construction machines used in a construction site, such as, for example, a crane or a bulldozer can be achieved reliably.

In the invention described in claim 10, securement of security regarding manipulations of operating and manipulating stations of facilities and apparatuses arranged in operation management rooms for various manufacturing facilities and managing facilities installed in various factories or plants can be achieved reliably. Further, since the "manipulation history information file" storing manipulation history information of the manipulator therein is provided, information regarding the manipulations of the manipulator can be decoded and the manipulator can be alerted regarding his/her manipulation if necessary.

In the invention described in claim 11, the manipulation station can secure securement of security regarding manipulation of a manipulation terminal of the task management information network system installed within in a company reliably. Further, since the mobile information terminal is provided with the "manipulation history information file" storing the manipulation history information of the manipulator therein, it is possible to analyze information about the manipulations of the manipulator to alert the manipulator regarding the manipulations if necessary.

In the invention described in claim 12, since the mobile information terminal has the "manipulation standard information file" storing manipulation standard information therein, the "manipulation monitoring means" for comparing the manipulation history information stored in the "manipulation history information file" and the manipulation standard information stored in the "manipulation standard information file" with each other to extract a manipulation different from the manipulation standard information, the "different manipulation accumulation file" recording a manipulation different from the manipulation standard information therein, extracted by the manipulation monitoring means, and the "manipulation-alerting means" for, when the manipulator performs a manipulation identical with the different manipulation, referring to the different manipulation accumulation file and alerting the manipulator before the manipulator performs the manipulation such that the manipulator performs a manipulation so as to adapt to the manipulation standard information, the mobile information terminal can indicate the manipulation tendency of the manipulator in advance based upon the manipulation history information of the manipulator to alert the manipulator.

As a result, in the invention described in claim 12, by grasping the tendency or the habit of the manipulations of the manipulator based upon the history of the manipulations of the manipulator and alerting the manipulator regarding the tendency or the habit in advance before performing a manipulation, pre-correction of a manipulation can be performed.

In the invention described in claim 13, since the authentication information is constituted of a code information composed of numerals of a predetermined number of digits and the authentication information decoding means performs authentication when predetermined numeral information obtained by combination of mutual numerals is consistent with numeral information as the collation information held in advance, authentication information can be constituted with a simple configuration effectively and security can be secured effectively. Brief Description of Drawings

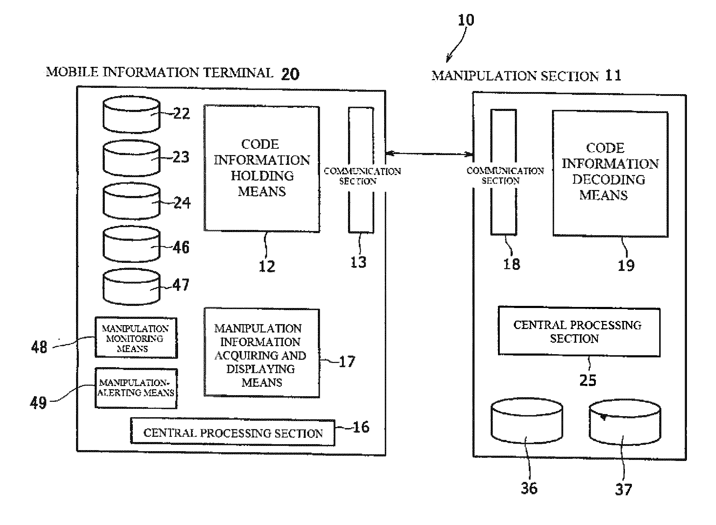

Figure 1 is a configuration block diagram showing an embodiment of a manipulator authentication operating system according to the present invention;

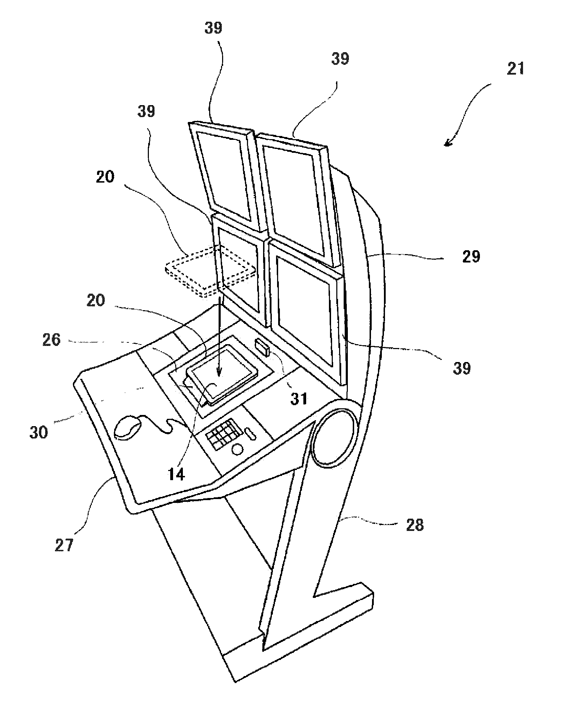

Figure 2 is a perspective view showing an embodiment of the manipulator authentication operating system according to the present invention and showing a case where the manipulator authentication operating system is manipulated by acquiring authentication regarding a manipulation of an operating and manipulating station for facilities and apparatuses installed in a facility managing and manipulating room or the like of a factory or a plant facility from a tablet type computer which is a mobile information terminal;

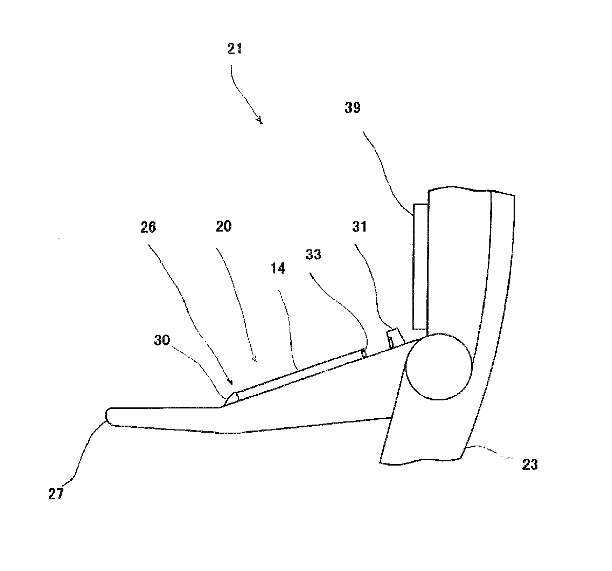

Figure 3 is a side view showing an embodiment of the manipulator authentication operating system according to the present invention and showing a placement portion of the mobile information terminal of the operating and manipulating station in Figure 2;

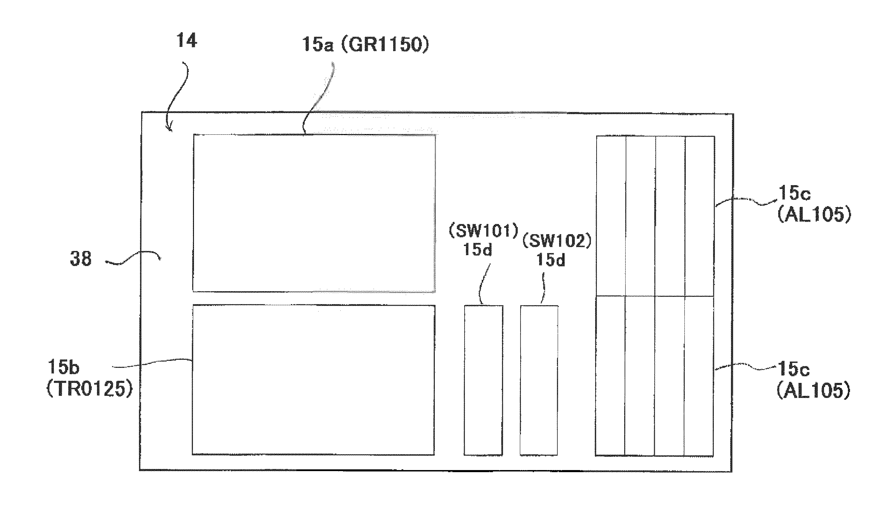

Figure 4 is an explanatory diagram showing an embodiment of the manipulator authentication operating system according to the present invention and showing, in the case where the manipulator authentication operating system is manipulated by acquiring authentication regarding a manipulation of an operating and manipulating station for facilities and apparatuses installed in a facility managing and manipulating room or the like of a factory or a plant facility from a tablet type computer which is a mobile information terminal, one example of an arrangement state of display frames displayed on a display of the mobile information terminal;

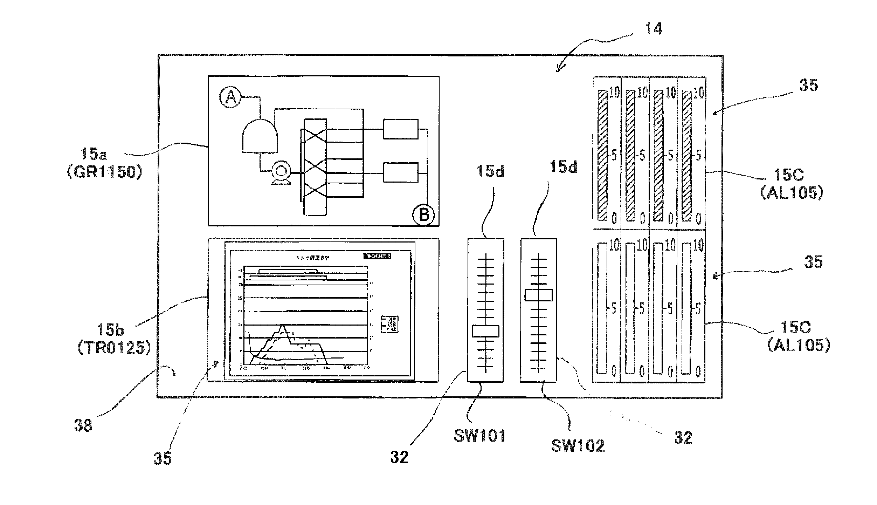

Figure 5 is an explanatory diagram showing an embodiment of the manipulator authentication operating system according to the present invention and showing, in the case where the manipulator authentication operating system is manipulated by acquiring authentication regarding a manipulation of an operating and manipulating station for facilities and apparatuses installed in a facility managing and manipulating room or the like of a factory or a plant facility from a tablet type computer which is a mobile information terminal, a state where information required for operation and manipulation has been displayed within display frames displayed on a display of the mobile information terminal; and

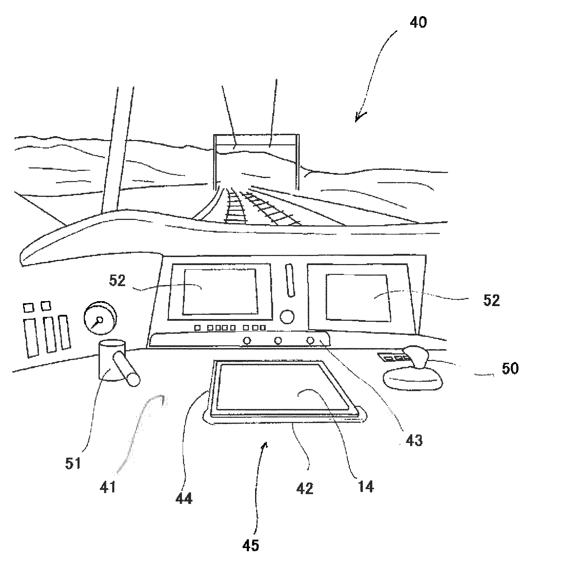

Figure 6 is an explanatory view showing an embodiment of the manipulator authentication operating system according to the present invention, showing a case where a manipulator authentication operating system has been applied to an electric train driving and manipulating, and showing a state where a mobile information terminal has been set on a driver's seat.

### Detailed Description of the Invention

A manipulator authentication operating system according to the present invention will be described below in detail based upon an embodiment shown in an accompanying drawings.

As shown in Figure 1, a manipulator authentication operating system 10 according to this embodiment is configured so as to confirm authentication of a manipulator of a manipulation section 11 and perform a manipulation to an object to be manipulated in cooperation with the manipulation section 11 by a mobile information terminal 20 possessed by the manipulator.

### 1: Whole Configuration

In this embodiment, as shown in Figure 1, the mobile information terminal 20 is provided with "authentication information holding means" 12 for holding unique authentication information, and "communication section" 13 that can transmit the authentication information to the manipulation section and can perform information communication relating to manipulation with the manipulation section 11.

Further, the mobile information terminal 20 is provided with "manipulation information acquiring and displaying means" 17 which has display frame specifying information for specifying respective display frames 15 for displaying respective manipulation information items for displaying various manipulation information items required for manipulations of the manipulation section 11 on a display 14 of the mobile information terminal 20 and display frame arrangement information showing an arrangement state of the respective display frames 15 within a screen of the display 14, and which accesses a central processing section 35of the manipulation section 11 via the communication section 13 to request transmission of the display frames 15 and manipulation information to be displayed within the display frames 15 and display information required for manipulation on the display 14.

The mobile information terminal 20 is further provided with "manipulation history information file" 22 storing manipulation history information of an manipulator therein, "operation plan file" 23 storing an operation plan of facilities and apparatuses in the factory, and "operation schedule information file" 24 recording an operation schedule therein.

On the other hand, the manipulation section 11 is provided with "communication section" 18 performing information communication with the mobile information terminal 20, "authentication information decoding means" 19 decoding authentication information transmitted by the "authentication information holding means" 12 of the mobile information terminal 20 connected to the manipulation section 11 regarding communication and, when the decoded authentication information is consistent with collation information held in advance, transmitting a signal indicating the consistency to the central processing section 25, and the "central processing section" 25 that transmits the display frame 15 to be displayed on the display 14 of the mobile information terminal 20 and manipulation information to be displayed within the display frame 15 via a communication section 18 in response to a request from the "manipulation information acquiring and displaying means" 17 of the mobile information terminal 20 when the "authentication information decoding means" 19 has determined that the authentication information transmitted from the mobile information terminal is consistent with the collation information.

### 2: First Embodiment

In this embodiment, as shown in Figure 2, the manipulation section 11 is formed of an operating and manipulating station 21 for facilities and apparatuses installed in a facility managing and manipulating room or the like such as a factory or a plant facility. Further, the mobile information terminal 20 is a tablet type computer. Therefore, the mobile information terminal 20 is formed in a flat plate shape as a whole and is a portable personal computer provided with a display portion/input portion adopting a touch panel system.

As shown in Figure 2 and Figure 3, the operating and manipulating station 21 is formed in a desk shape and is provided with leg portions 28, a table portion 27 provided at upper end portions of the leg portions 28, and a display panel portion 29 formed at a front end of the table portion 27 so as to stand up from the upper end portions of the leg portions 28, and four displays 39 are provided on the display panel portion 29, so that information items required for operations of respective facilities in a factory or a plant can be displayed properly.

A mobile information terminal arrangement portion 26 provided at a central portion of the table portion 27 such that the mobile information terminal 20 can be placed is provided on the table portion 27, and a manipulator sits in front of the table portion 27 to perform a manipulation. The mobile information terminal arrangement portion 26 is formed in an upwardly inclined fashion toward the manipulator.

The mobile information terminal arrangement portion 26 is provided with a mobile information terminal holding portion 30 provided at a lower end portion of the mobile information terminal arrangement portion 26 and an infrared communication (IrDA) port portion 31 provided at an upper portion of the mobile information terminal arrangement portion 26 and forming the communication section 18 on the operating and manipulating station 21. On the other hand, in this embodiment, the mobile information terminal 20 is provided with an infrared communication port portion 33.

Therefore, as shown in Figure 1 and Figure 3, the manipulator can install the mobile information terminal 20 on the operating and manipulating station 21 in such a state that the mobile information terminal 20 and the operating and manipulating station 21 can perform infrared communication to each other by causing the mobile information terminal 20 held by the manipulator himself/herself to abut on the mobile information terminal holding section 30 and placing the mobile information terminal 20 on the placement portion 26 in such a state that the infrared port portion 33 on the mobile information terminal side faces the infrared communication port portion 30 on the operating and manipulating station 21 side.

A procedure of manipulating the operating and manipulating station 21 by using the mobile information terminal 20 will be described below.

As described above, in a state where the operating and manipulating station 21 has been actuated, when the manipulator places the mobile information terminal 20 which has been similarly actuated on the mobile information terminal arrangement portion 26 and has inputted an instruction of the "operating and manipulating station manipulation" to the mobile information terminal 20, the mobile information terminal 20 starts a procedure for operation and manipulation start of the operating and manipulating station 21.

First, the central processing section 16 of the mobile information terminal 20 actuates the communication section 13 to establish an infrared communication line with the operating and manipulating station 21. The infrared communication is continuously performed during manipulation of the operating and manipulating station 21 by the mobile information terminal 20.

Next, the central processing section 16 of the mobile information terminal 20 transmits authentication information held by the authentication information holding means 12 from the infrared communication port portion 33 to the infrared communication port portion 31 constituting the communication section 18 of the operating and manipulating station 21.

In this embodiment, the "authentication information" held by the authentication information holding means 12 is configured in the following manner.

That is, in this embodiment, the "authentication information" is constituted of code information composed of numerals of a predetermined number of digits, and the code information decoding means (authentication information decoding means) 19 is constituted so as to perform authentication when predetermined numeral information obtained by combination of mutual numerals is consistent with the collation information held in advance as the numeral information.

The authentication information holding means 12 of the mobile information terminal 20 holds a numeral form such as, for example, "41 52" as the code information and the communication section 13 transmits the numeral information "41 52" to the communication section 18 of the operating and manipulating station 21.

The central processing section 25 of the operating and manipulating station 21 has confirmed that the communication section 18 has received the code information via the infrared communication port portion 31, it instructs the code information decoding means 19 to perform decoding of the received authentication information. In this case, the code information decoding means 19 holds "when a smaller numeral of the two upper digits is subtracted from a larger numeral thereof, [3] is obtained" and "when numerals of the two lower digits are added to each other, [7] is obtained" as a right answer condition.

Therefore, when the transmitted code information meets the above condition, the code information decoding means 19 transmits a signal indicating "the code information is right" to the central processing section 25. When the central processing section 25 confirms this signal, the central processing section 25 transmits a signal indicating "the code information is right. Manipulation start is okayed" to the mobile information terminal 20 via the communication section 18 in response to the code information decoding means 19.

On the other hand, when the transmitted authentication information does not meet the above condition, the code information decoding means 19 transmits a signal indicating "the authentication information is wrong" to the central processing section 25. When the central processing section 25 confirms this signal, the central processing section 25 transmits a signal indicating "an error" to the mobile information terminal 20 via the communication section 18 in response to the code information decoding means 19.

Therefore, when the mobile information terminal 20 receives the signal indicating "an error", the manipulator cannot acquire authentication, and cannot perform an operation and a manipulation of the operating and manipulating station 21 using the mobile information terminal 20, so that security regarding the manipulations of the operating and manipulating station 21 can be secured easily and reliably.

When the mobile information terminal 20 receives the signal indicating "the code information is right. Manipulation start is okayed" from the code information decoding means 19, the central processing section 16 instructs the manipulation information acquiring and displaying means 17 to transmit an instruction requesting, to the operating and manipulating station 21, the display frame 15 and the manipulation information 35 for displaying information required to perform manipulations for the facilities and apparatuses of a factory or a plant on the display 14 of the mobile information terminal 20 to the manipulation section 11 via the communication section 13.

The display frame 15 is, for example, a frame displayed within the screen of the display 14, as shown in Figure 4, where operation and manipulation information 35, manipulation switches 32, and the like in various forms are displayed, as shown in Figure 5.

The manipulation information acquiring and displaying means 17 holds mane information of respective display frames 15 (for example, GR1150, TR0125, and the like) and arrangement information of the respective display frames 15 on the screen of the display 14. The arrangement information of the respective display frames 15 is formed based upon a display frame arrangement easy to see for the individual manipulator, and the display frame arrangement easy to see may be different for respective manipulators. Therefore, when the respective display frames 15 are acquired on the mobile information terminal 20 side, it is possible to arrange the display frames 15 with an arrangement customized in response to preference of the manipulator and provide a manipulation screen easy to see in response to an individual manipulator.

The manipulation information acquiring and displaying means 17 requests, via the communication section 13, the operating and manipulating station 21 to specify a display frame 15 required for manipulation from the name to transmit the same to the mobile information terminal 20 and requests, via the communication section 13, the operating and manipulating station 21 to transmit the operation information 35 displayed within the respective display frames 15.

Upon reception of the above requests, the central processing section 25 extracts a display frame 15 stored within the display frame file 36 and relating to the request from the mobile information terminal 20 to transmit the same to the mobile information terminal 20 side and transmits manipulation information 35 to be displayed within the display frame 15 to the mobile information terminal 20.

When the mobile information terminal 20 receives the display frame 15 and the manipulation information 35, as shown in Figure 4 and Figure 5, the manipulation information acquiring and displaying means 17 displays the display frames 15 within the display 14 based upon the arrangement information of the respective frames and displays the manipulation information within the display frames 15 displayed.

As shown in Figure 5, in this embodiment, a display frame 15a (GR1150) is displayed at an upper portion on a left side end portion within the screen 38 of the display 14, where a schematic diagram of respective manufacturing steps in a factory is displayed, and a display frame 15b (TR0125) is displayed below the display frame 15a, where a trend showing change of each facility based upon time elapsing in factory facilities is displayed. Further, display frames 15c (AL105) displaying alarms regarding operations and manipulations of respective installed apparatuses in the factory are displayed on a right side end portion of the screen 38, and they constitute an alarm portion. Further, manipulation switches 15d (SW101, SW102) displayed by a software are displayed at a central portion of the screen 38 on the display.

Therefore, since respective display frames 15 and manipulation information within the respective display frames 15 which are required for the above manipulations are displayed, manipulations of respective facilities and apparatuses in the factory can be performed via the operating and manipulating station 21 based upon the infrared communication established between the communication section 13 and the communication section 18 by the manipulator touching the manipulating switches SW101 and SW102 displayed on the display 14 constituted of a touch panel of the mobile information terminal 20 with the manipulator's finger.

In this connection, in this embodiment, since the respective display frames 15 and the operation and manipulation information displayed within the manipulation display frame 15 are conventionally displayed on the displays 39 installed in the display panel portion 29, the manipulator can perform operation and manipulation for the facilities and apparatuses in the factory while seeing both the mobile information terminal 20 and the displays 39.

Further, as shown in Figure 1, in the manipulator authentication operating system 10 according to this embodiment, the mobile information terminal 20 is provided with the "manipulation history information file" 22 storing manipulation history information of the manipulator therein, the "operation plan file" 23 storing an operation plan of the facilities and apparatuses in the factory therein, and the "operation schedule information file" 24 recording an operation schedule therein. Therefore, all the past manipulation history information of the manipulator is stored and current manipulation history information is stored in the manipulation history information file 22 of the mobile information terminal 20.

Further, as shown in Figure 1, the mobile information terminal 20 has "manipulation standard information file" 46 storing manipulation standard information therein, "manipulation monitoring means" 48 for comparing manipulation history information of the manipulator stored in the manipulation history information file 22 and the manipulation standard information stored in the manipulation standard information file 46 with each other to extract a manipulation different from the manipulation standard information, "different manipulation accumulation file"47 recording the manipulation different from the manipulation standard information and extracted by the manipulation monitoring means 48 therein, and "manipulation-alerting means" 49 for referring to the different manipulation accumulation file 47 and, when the manipulator performs a manipulation identical to the different manipulation, alerts the manipulator such that the manipulator performs a manipulation adapted to the manipulation standard information before the manipulator performs the identical manipulation.

Therefore, in this embodiment, the "manipulation monitoring means" 48 always monitors manipulations of the manipulator during operation and manipulation, and when a manipulation different from the manipulation standard information has been performed, the information of the manipulation is accumulated in the different manipulation accumulation file 47, so that when the manipulator tries to perform manipulation identical with the different manipulation accumulated in the different manipulation accumulation file 47, the "manipulation-alerting means" 49 an alert the manipulator in some way before the manipulation is performed.

For example, in a food manufacturing plant, in such a case that a heat sterilization treatment is performed from a viewpoint of sanitary requirement while a plurality of materials are being mixed in a batch tank, such a situation that a heating treatment starting manipulation is too early or the heating treatment starting manipulation is apt to be late due to the habit of a manipulator regarding the manipulator's manipulation may occur.

In such a case, the most ideal heating treatment starting time has been determined from a mixing state of the materials as a manipulation standard information, and the manipulation standard information has been stored in the manipulation standard information file. Therefore, the manipulation monitoring means 48 always refers to both the manipulation history file 22 and the manipulation standard information 46 and when an actual manipulation performed by the manipulator is different from the manipulation standard information, the manipulation monitoring means 48 records the information of the manipulation in the different manipulation accumulation file 47.

When the manipulator performs a heating treatment manipulation identical with the manipulation recorded in the different manipulation accumulation file 47, the manipulation monitoring means 48 issues a warning indicating, for example, "heating treatment manipulation starting is apt to be late" or "heating treatment manipulation starting is apt to be too early" to the manipulator before the manipulation is performed by proper means.

The above warning is performed on the mobile information terminal 20 through sound displaying, screen displaying, warning sound, or lighting of a warning lamp appropriately. In this case, when the manipulation monitoring means 48 determines that the above various warnings are insufficient, for example, it can display a heating treatment manipulation time corresponding to materials to be mixed on the display specifically to support a manipulation while be performing guidance.

Further, in this embodiment, the manipulation plan file 23 is provided, and a running plan, manufacturing procedures of various products, and the like are stored in the manipulation plan file 23. Therefore, the manipulator refers to the running plan, the manufacturing procedures of various products, and the like to confirm a manipulation to be performed.

Further, in this embodiment, as described above, since all histories of operations and manipulations of the manipulator are stored in the manipulation history file 22 in real time, the manipulator can also prepare a daily report of operating and running in the factory or the plant rapidly by utilizing data of the manipulation history information file 22 properly and printing out the daily report to submit the same to a company.

On the other hand, since the operating and manipulating station 21 side holds an operation record for each factory or each plant installation, it can use the operation record as information about a running record, an installation manipulation record, a production record or the like.

In this connection, in this embodiment, though the case where the manipulator authentication operating system according to the present invention has been applied to the operating and manipulating station in a factory or a plant has been described as an example, the present invention is not limited to this embodiment, and, for example, the manipulation section may be a manipulation terminal of a task management information network system installed within a company.

In this case, the "task management information network system" is, for example, an in-house network system managing tasks such as business or sales for a company. Therefore, when the manipulator authentication operating system according to the present invention is used in a task management information network system, the mobile information terminal 20 is used in order to acquire authentication for making manipulation of the task management information network system possible by decoding an authentication number according to a method similar to the above, so that securement of security regarding use of the task management information network system can be performed easily and reliably.

Further, when authentication for use has been acquired by the mobile information terminal 20, the task management information network system can be manipulated by the mobile information terminal 20.

That is, by acquiring manipulation information 35 such as sales management information, inventory management information, delivery date management information, personnel management information, or financial management information together with the display frames 15 from the task management information network system constituting the manipulation section 11 and displaying the manipulation information 35 on the display 14 of the mobile information terminal 20, the task management information network system can be manipulated via the mobile information terminal 20 based upon the manipulation information 35 displayed on the display frames 15 displayed in a state suitable for the manipulator.

That is, in this embodiment, by utilizing the mobile information terminal 20, it is made possible to perform not only confirmation of such manipulation information as sales management information, inventory management information, delivery date management information, personnel management information or financial management information, and manipulation of edition or the like but also update of management information performed by inputting new information at any time.

Of course, in this case, the whole manipulation history of the manipulator is managed by the manipulation history information file 22, and a manipulation of the manipulator is monitored by the manipulation monitoring means 48, so that when a manipulation different from the manipulation standard information has been performed, the manipulation is stored and accumulated in the different manipulation accumulation file 47, and when a manipulation identical with the manipulation standard information is performed, the manipulation monitoring means 48 performs manipulation management by performing such an alert as properly displaying on the display 14 or generating warning sound by the manipulation-alerting means 49.

### 3. Second Embodiment

In this second embodiment, as shown in Figure 6, the manipulation section is constituted of a cockpit of an electric train.

In this embodiment, a placement portion 44 is formed on a table portion 41 of a driving and manipulating portion 40 provided in front of a driver's seat and a mobile information terminal holding portion 42 and an infrared communication port portion 43 constituting the communication section 18 are provided like the first embodiment.

By putting a mobile information terminal 45 on the placement portion 44 and actuating the mobile information terminal 45 together with actuation of the driving and manipulating portion 40 of an electric train, an infrared communication line with an infrared communication port portion (not shown) of the mobile information terminal 45 is formed and information communication between the mobile information terminal 45 and the driving and manipulating portion 40 is made possible.

Thereafter, like the first embodiment, the authentication information holding means 12 of the mobile information terminal 45 transmits authentication information to the communication section 18 of the driving and manipulating portion 40 via the communication section 13.

When the central processing section 25 of the driving and manipulating portion 40 has confirmed that the communication section 18 has received the authentication information via the infrared communication port portion, it causes the code information decoding means 19 to decode the received authentication information. When the transmitted authentication information satisfies a decoding condition held in the code information decoding means 19 in advance, the code information decoding means 19 transmits a signal indicating "authentication information is right" to the central processing section 25.

When the central processing section 25 has confirmed this signal, the central processing section 25 transmits a signal indicating "authentication information is right. Manipulation start is okayed" to the mobile information terminal 45 via the communication section 18 in response to the code information decoding means 19.

On the other hand, when the transmitted authentication information does not satisfy the above condition (requirement), the code information decoding means 19 transmits a signal indicating "authentication information is wrong" to the central processing section 25. When the central processing section 25 has confirmed this signal, the central processing section 25 transmits a signal indicating "an error" to the mobile information terminal 45 via the communication section 18 in response to the code information decoding means 19.

Therefore, when the mobile information terminal 45 as received the signal indicating "an error", since the manipulator cannot operate and manipulate the operating and manipulating station 21 by using the mobile information terminal 20, security regarding manipulation of the operating and manipulating station 21 is secured easily and reliably.

When the communication section 13 of the mobile information terminal 45 has received a signal indicating "authentication information is right. Manipulation start is okayed" from the code information decoding means 19, the central processing section 16 instructs the manipulation information acquiring and displaying means 17 to request, to the driving and manipulating portion 40, display frames 15 and manipulation information 35 for displaying information required to perform driving and manipulating of the electric train (information about a speed, power required for running, a braking air pressure, and the like) on the display 14 of mobile information terminal 45 via the driving and manipulating portion 40. Different portions from the first embodiment will be described below.

Transmission of respective display frames and driving and manipulating information to be displayed within respective display frames is requested from the driving and manipulating portion 40 to the manipulation information acquiring and displaying means 17. Arrangement information of the respective display frames 15 is formed based upon a display frame arrangement easy to see for the individual manipulator, and the display frame arrangement easy to see is different for respective individual manipulators, so that a display frame arrangement customized in response to an individual manipulator and easy to see for the individual manipulator can be configured.

When the mobile information terminal 20 has received the display frames 15 and the manipulation information 35, the manipulation information acquiring and displaying means 17 displays the respective display frames 15 within the display 14 based upon the arrangement information of the respective frames and displays the manipulation information within the display frames 15 displayed.

Thereby, the manipulator can drive and manipulate the electric train by using the driving and manipulating portion 40 while using the mobile information terminal 20.

In the second embodiment, driving and manipulating of an actual electric train are performed by an electric power supply lever (accelerator) 50 and a brake 51 arranged on the table portion 41, which is different from the first embodiment. Therefore, in the second embodiment, the mobile information terminal 20 functions only as displaying means for the drive and manipulation information.

In the second embodiment, however, like the first embodiment, as shown in Figure 1, the mobile information terminal 45 is provided with the "manipulation history information file" 22 storing manipulation history information of the manipulator therein, the "operation plan file" 23 storing a driving schedule of train therein, and the "operation schedule information file" 24 recording an future driving schedule therein. Therefore, the whole past manipulation history information of the manipulator is stored and current manipulation history information is accumulated in the manipulation history information file 22 of the mobile information terminal 20.

Further, the mobile information terminal 20 has a manipulation standard information file 46 storing manipulation standard information therein, "manipulation monitoring means" 48 for comparing manipulation history information of the manipulator stored in the manipulation history information file 22 and the manipulation standard information stored in the manipulation standard information file 46 with each other to extract a manipulation different from the manipulation standard information, the different manipulation accumulation file 47 recording the manipulation different from the manipulation standard information and extracted by the manipulation monitoring means 48 therein, and "manipulation-alerting means" 49 for referring to the different manipulation accumulation file 47 and, when the manipulator performs a manipulation identical to the different manipulation, alerts the manipulator such that the manipulator performs a manipulation adapted to the manipulation standard information before the manipulator performs the identical manipulation.

Therefore, in the second embodiment, the "manipulation monitoring means" 48 always monitors driving of the driver during driving and manipulating and when a manipulation different from the manipulation standard information has been performed, the information of the manipulation is accumulated in the different manipulation accumulation file 47, so that when the driver tries to perform manipulation identical with the different manipulation accumulated in the different manipulation accumulation file 47, the "manipulation-alerting means" 48 can alert the driver in some way before the manipulation is performed.

For example, in drive and manipulation of an electric train, when the electric train is running at a high speed, there is such a case that a brake control manipulation is apt to be late at an entering time of the electric train to a place where a railway is curved due to the habit of the driver regarding the drive so that the electric train enters the curve of the railway at a speed exceeding a predetermined entering speed, which results in a danger. Further, such a situation may occur that the brake control manipulation is too early so that the electric train cannot maintain the predetermined speed and the driving speed at a curve becomes lower than a drive standard, which results in service delay.

In such a case, from a viewpoint of a service along a diagram schedule, a running speed responding to a magnitude of a curve is determined and a time point and a level of a brake manipulation where the brake manipulation should be performed are determined as the manipulation standard information in order for the electric train to run at the speed, so that the manipulation standard information is stored in the manipulation standard information file. Therefore, the manipulation monitoring means 48 always refers to both the manipulation history file 22 and the manipulation standard information file 46, and when the actual driving and manipulating of the driver are different from the manipulation standard information, records the information about the actual driving and manipulating in the different manipulation accumulation file 47.

When the driver performs the accelerating manipulation identical with the manipulation recorded in the different manipulation accumulation file 47, a warning indicating "brake manipulation is apt to be late" or "brake manipulation is apt to be early" is issued to the drive of the driver by proper means.

The above warning is performed on the mobile information terminal 45 through sound displaying, screen displaying, warning sound, or lighting of a warning lamp appropriately. In this case, when the manipulation monitoring means 48determines that the above various warnings are insufficient, for example, it can display an entering speed to a curve and a braking timing on the display specifically to support a drive while be performing guidance.

Further, as shown in Figure 6, it is also possible to display information required for running manipulation on a display panel portion 52 provided in the drive and manipulation portion 40 of a train (the electric train) and display other information relating to the running on the display 14 of the mobile information terminal 45.

That is, in the second embodiment, the mobile information terminal 20 is provided with a running plan file 23, and a running plan of the electric train and the like are stored in the running plan file 23. Therefore, the manipulator can refer to the running plan file or the like to confirm the same.

Further, in the second embodiment, the mobile information terminal 45 has a running schedule information file 24, and since information items regarding arrival times and passage times of respective stop stations and a running route of the electric train are stored in the running schedule information file 24, these information items can be referred to by reading out the information items.

Further, in the second embodiment, as described above, since the whole drive and manipulation history of the driver is stored in the manipulation history information file 22 in real time, the driver can also prepare a daily report of driving of the electric train rapidly by utilizing data of the manipulation history information file 21 properly and printing out the daily report to submit the same to a company.

On the other hand, the drive and manipulation portion 40 holds driving record, it can use the operation record . In this connection, in the second embodiment, the case where the "power driving machine apparatus" is each of various transport facilities and the transport facilities are electric trains has been shown, but the present invention is not limited to the second embodiment, and the "power driving machine apparatus" may be a construction machine such as a crane or a tractor. Further, the "transport facilities" is not limited to the electric train, but it may be an airplane, a ship, or a land transportation vehicle such as a bus, a taxi or a truck.

In this connection, since the mobile information terminal according to the second embodiment has the operation plan file 23 and the operation schedule information file 24, for example, in the case of the transportation facilities which must be run by many crews, such as a large airplane or a large ship, it is necessary to confirm the running plan in advance by all the crews to form unity of intensions of the crews before the running start.

In such a case, for example, in a crew meeting before the running start, all the crews get together each bringing the mobile information terminal 20, 45 used in the manipulator authentication operating system according to the present invention and they can achieve information sharing easily by establishing infrared communication lines mutually to record running information, caution matters and the like in the operation plan file 23 and the operation schedule information file 24 and can utilize the shared information for manipulation of the manipulation section 11.

Further, in the respective embodiments, the example where when the above-described authentication information is constituted of code information composed of numerals of a predetermined number of digits, and the "code information decoding means" 19 of the manipulation section 11 transmits a signal indicating that the unique code information transmitted by the "code information holding means" 12 of the mobile information terminal via the "communication section" 13 is consistent with the collation information to the mobile information terminal, the object to be manipulated can be manipulated in cooperation with the manipulation section by the mobile information terminal has been described, but the present invention is not limited to the above embodiments, and, for example, such a configuration may be adopted that when the authentication information is constituted of a specific program itself, the "authentication information holding means" 12 of the mobile information terminal 20 holds the program, the "authentication information decoding means" 19 of the manipulation section 11 reads the program held by the " authentication information holding means" 12 of the mobile information terminal 20 to confirm presence of the program, and the manipulation section 11 transmits a signal indicating the presence to the mobile information terminal 20, a manipulation of the object to be manipulated can be performed in cooperation with the manipulation section 11 by the mobile information terminal 20.

Further, such a configuration can be adopted that when the authentication information is constituted of specific information present within a predetermined program, for example, specific character information, specific numerical information, a specific program setting, the authentication information holding means 12 of the mobile information terminal 20 holds the program, the "authentication information decoding means" 19 of the manipulation section 11 decodes the program held by the "authentication information holding means" 12 of the mobile information terminal 11 to confirm presence of the program, and the manipulation section 11 transmits a signal indicating such a fact to the mobile information terminal 20, a manipulation of the object to be manipulated can be performed by the mobile information terminal 20 in cooperation with the manipulation section 11, and the present invention is not limited to the above-described embodiments.

### Industrial Applicability

Since the present invention can be widely applied to a manipulator authentication operating system, it has industrial applicability.

### Reference Signs List

- 10: manipulator authentication operating system,
- 11: manipulation section
- 12: code information holding means (authentication information holding means)
- 13: communication section
- 14: display
- 15: display frame
- 16: central processing section
- 17: manipulation information decoding means
- 18: communication section
- 19: code information decoding means (authentication information decoding means)
- 20: mobile information terminal
- 21: operating and manipulating station
- 22: manipulation history information file
- 23: operation plan file
- 24: operation schedule information file
- 25: central processing section
- 26: mobile information terminal arrangement portion
- 27: table portion
- 28: leg portion
- 29: display panel portion
- 30: mobile information terminal holding portion
- 31: infrared communication port portion (operating and manipulating station side)
- 32: manipulation switch
- 33: infrared communication port portion (mobile information terminal side)
- 34: frame arrangement information
- 35: manipulation information
- 36: display frame file
- 37: manipulation information file
- 38: screen
- 39: display
- 40: operation and manipulation portion
- 41: table portion
- 42: mobile information terminal holding portion
- 43: infrared communication portion
- 44: placement portion
- 45: mobile information terminal
- 46: manipulation standard information file
- 47: different manipulation accumulation file
- 48: manipulation monitoring means
- 49: manipulation-alerting means
- 50: accelerator
- 51: brake
- 52: display panel

## Claims

1. A manipulator authentication operating system that confirms authentication of a manipulator of a manipulation section and performs a manipulation in cooperation with the manipulation section by a mobile information terminal possessed by the manipulator, wherein
the mobile information terminal has "authentication information holding means" for holding unique authentication information and "a communication section" that can transmit the authentication information to the manipulation section and can perform information communication relating to an operation and a manipulation between the communication section and the manipulation section, and the manipulation section has "authentication information decoding means" that decodes authentication information transmitted by the "authentication information holding means" of the mobile information terminal via the "communication section" and, when the decoded authentication information is consistent with collation information held in advance, transmits a signal indicating the consistency to the mobile information terminal; and
a manipulation of an object to be manipulated can be manipulated by the mobile information terminal in cooperation with the manipulation section when the "authentication information decoding means" has transmitted a signal indicating that the unique authentication information transmitted from the mobile information terminal is consistent with the collation information to the mobile information terminal.

2. A manipulator authentication operating system that confirms authentication of a manipulator of an manipulation section and performs a manipulation in cooperation with the manipulation section by a mobile information terminal possessed by the manipulator, wherein
the mobile information terminal comprises "authentication information holding means" for holding unique authentication information and "communication section" that can perform information communication relating to an operation and a manipulation between the communication section and the manipulation section, and the manipulation section has "communication section" that can perform information communication between the communication section and the mobile information terminal and
"authentication information decoding means" for, when presence of authentication information held by the "authentication information holding means" of the mobile information terminal is confirmed via the "communication section" of the manipulation section, transmitting a signal indicating the presence to the mobile information terminal; and
a manipulation of an object to be manipulated can be performed in cooperation with the manipulation section by the mobile information terminal when the "authentication information decoding means" confirms the presence of authentication information held by the "authentication information holding means" and transmits a signal indicating the presence to the mobile information terminal.

3. The manipulator authentication operating system according to claim 1, wherein the authentication information is constituted of a predetermined program.

4. The manipulator authentication operating system according to claim 1, wherein the authentication information is constituted of specific information present in a predetermined program.

5. The manipulator authentication operating system according to claim 1, further comprising "manipulation information acquiring and displaying means" that has display frame-specifying information for specifying respective display frames for displaying, on a display of the mobile information terminal, various manipulation information items required for an operation and a manipulation of the object to be manipulated and display frame arrangement information showing an arrangement state of the respective display frames within a screen of the display, and requests transmission of the display frames and manipulation information displayed within the display frames to display information required for a manipulation of the object to be manipulated, wherein
the manipulation section is configured so as to transmit a display frame to be displayed on the display of the mobile information terminal and manipulation information to be displayed within the display frame to the mobile information terminal via the communication section in response to a request from the "manipulation information acquiring and displaying means" when it is determined by the authentication information decoding means that the authentication information transmitted from the mobile information terminal is consistent with the collation information.

6. The manipulator authentication operating system according to claim 1, wherein the manipulation section is an operation control section of a power driving machine apparatus, and the mobile information terminal is further provided with "manipulation history information file" storing past manipulation history information of the manipulator therein, "operation plan file" storing an operation plan associated with an operation of the power driving machine apparatus therein, and "operation schedule information file" recording an operation schedule of the power driving machine apparatus therein.

7. The manipulator authentication operating system according to claim 6, wherein the power driving machine apparatus is each of various transport facilities.

8. The manipulator authentication operating system according to claim 6, wherein the power driving machine apparatus is each of various construction machines.

9. The manipulator authentication operating system according to claim 7, wherein the transport facilities are ships, airplanes, electric trains, or land transportation vehicles.

10. The manipulator authentication operating system according to claim 1, wherein the manipulation section is an operating and manipulating station for facilities and apparatuses in a factory or a plant, and the mobile information terminal is further provided with "manipulation history information file" storing past manipulation history information of the manipulator therein, "operation plan file" storing an operation plan of facilities and apparatuses in the factory therein, and "operation schedule information file" recording an operation schedule therein.

11. The manipulator authentication operating system according to claim 1, wherein the manipulation section is a manipulation terminal of a task management information network system installed within a company, and the operation terminal is provided with "manipulation history information file" storing past manipulation history information of the manipulator therein and a "task processing plan file" storing the task processing plan therein.

12. The manipulator authentication operating system according to any one of claims 6, 7, 8, 9, 10, and 11, wherein the mobile information terminal has "manipulation standard information file" storing manipulation standard information therein, "manipulation monitoring means" for comparing manipulation history information of the manipulator stored in the "manipulation history information file" and manipulation standard information stored in the "manipulation standard information file" with each other to extract a manipulation different from the manipulation standard information, "different manipulation accumulation file" recording a manipulation different from the manipulation standard information and extracted by the manipulation monitoring means therein, and "manipulation-alerting means" for referring to the "different manipulation accumulation file" and, when the manipulator performs a manipulation identical to the different manipulation, alerting the manipulator such that the manipulator performs a manipulation adapted to the manipulation standard before the manipulator performs the identical manipulation.

13. The manipulator authentication operating system according to claim 1, wherein the authentication information is composed of numerals of a predetermined number of digits, and the authentication information decoding means performs authentication when predetermined numeral information obtained from a mutual combination of the numerals is consistent with collation information held in advance.
